Europäisches Patentamt

(19) European Patent Office

Office européen des brevets

(11) Publication number: **0 025 661**
**A1**

(12) **EUROPEAN PATENT APPLICATION**

(21) Application number: **80303026.1**

(22) Date of filing: **29.08.80**

(51) Int. Cl.³: **H 01 M 2/06,** H 01 M 2/08

(30) Priority: **30.08.79 US 71135**

(43) Date of publication of application: **25.03.81**
**Bulletin 81/12**

(84) Designated Contracting States: **DE FR GB SE**

(71) Applicant: **ESB INTERNATIONAL CORPORATION,**
**2625 Concord Pike, Wilmington Delaware 19803 (US)**

(72) Inventor: **Veit, William Edward, 8 Macfarland Drive,**
**Ivyland Pennsylvania 18940 (US)**
Inventor: **Das, Kusal Kumar, PO Box 137, Wrightstown**
**Pennsylvania 18940 (US)**

(74) Representative: **Greenstreet, Cyril Henry et al, Thames**
**House (Fifth floor) Millbank, London SW1P 4QF (GB)**

(54) **Sealed battery.**

(57) The battery includes a case (14) and a terminal post (16) passing through a bore (20) in the case and sealed to the case. The bore (20) is formed in the base of a recess (18) in the outside of the case and the terminal post is attached to the case by a nut (32). The post is sealed to the case by a seal assembly comprising a first seal (24) between the post and the inside of the case, a second seal (34) between the nut, the post and the outside of the case, and a third seal (36) filling the recess in the case and surrounding the head of the nut.

- 1 -

## Sealed Battery

This invention relates to a battery, and, more specifically, to a secondary battery having an acid electrolyte and a multistage seal between the terminal post and the case.

Recently, the demand for small, lightweight, sealed, rechargeable lead-acid batteries has increased. Such batteries, which are capable of delivering a steady current in any position or orientation, may be employed in emergency lighting systems, portable power and garden tools, engine starting systems and in standby electrical systems for computers.

Like all lead-acid batteries, however, these batteries may evolve gases during recharging as water contained within the battery may be decomposed into hydrogen and oxygen.  In order to provide long life for these batteries, it is necessary to promote oxygen recombination within each cell.  It is known that a pressure of from 210 to 350 $kN/m^2$ within the cells will expedite oxygen recombination.

One of the problems facing the battery industry is the maintenance of a sound post seal.  Many designs employ epoxy resin to seal a lead electrode or post to a plastic battery cover.  Unfortunately, it is very difficult to get a good sealing bond between the epoxy resin and the lead post using mass production techniques.

Moreover, over an extended period of time, the sulphuric acid electrolyte tends to creep up the post to the seal.  The acid attacks the oxide coating on the post giving a porous layer of reaction product on the post. In time, the electrolyte advances up the length of the post and under the epoxy seal until a direct path is provided to the exterior.  This corrosive action destroys the seal allowing electrolyte leakage and shortening battery life.

- 2 -

Clearly, a post seal that remains sound in the face of corrosive attack is desirable.

The present invention provides a sealed battery, having a case (14), a terminal post (16) passing through a bore (20) in the case, and sealed to the case, characterised in that the bore (20) is formed in the base of a recess (18) in the outside of the case (14); that the terminal post (16) is attached to the case by a fastener (32) or (40) threadably engaged with the top of the post; and that the post is sealed to the case by a seal assembly comprising a first seal (24) between the post and the inside of the case, a second seal (34) between the fastener, the post and the outside of the case, and a third seal (36) filling the recess in the case and surrounding the head of the fastener.

A multistage seal of this kind is found to prevent leakage of electrolyte from small rechargeable batteries resulting from corrosion of the post by the electrolyte and to withstand high internal pressures within the battery. It is particularly useful in lead-sulphuric acid batteries.

The first seal is preferably an O-ring positioned between the post and a small recess in the inside of the case. Besides providing a first seal, the O-ring acts as a cushioning member between the terminal post and the battery case during assembly when the upper surface of the case is heat sealed to the remainder of the case. The O-ring should be made of a material resistant to attack by the battery electrolyte. Ethylene propylene copolymer is a suitable material for use with acid electrolytes.

The second seal is preferably provided by using as the fastener a nut which contains a sealant material in a recess in the underside of its head. When the nut is screwed down, sealant is extruded ──────────

about the post within the recess forming a seal between the case and the post. The sealant used should be a material resistant to attack by the battery electrolyte, and is conveniently a mastic.

The third seal may be formed by the introduction of epoxy resin into the recess. This reinforcing third seal should be capable of withstanding internal pressures of 350 $kN/m^2$ or more.

Two preferred embodiments of a sealed lead acid battery according to the invention are shown in the accompanying drawings in which:

Figure 1 shows a section through part of a first sealed battery according to the invention; and

Figure 2 shows a section through part of a second sealed battery according to the invention.

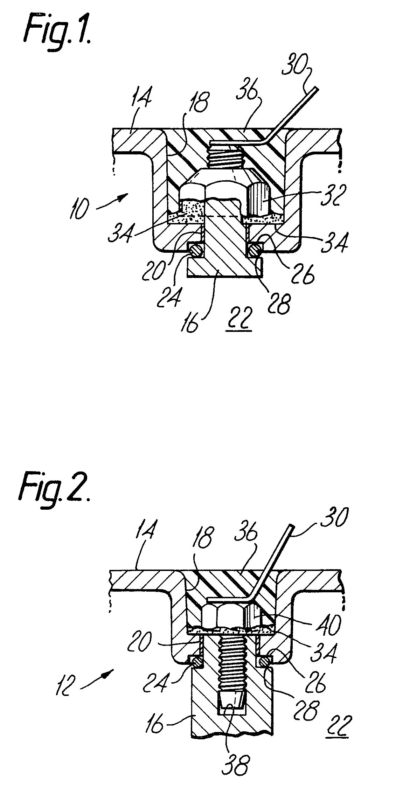

The battery shown in Figure 1 has a seal assembly indicated generally by reference numeral 10, whereas the battery shown in Figure 2 has a seal assembly with reference numeral 12. However, similar components of the two systems are numbered similarly.

Referring first to Figure 1, there is shown part of the upper surface of a battery case 14 of a lead-acid battery. The case 14 is formed with a recess 18. A bore 20 connects the interior of the battery 22 with the recess 18. The terminal post 16 projects into the recess 18 through the bore.

A flexible ethylene propylene copolymer O-ring 24 provides a first seal between post shoulder 28 and a recess 26 on the inside of the case 14. A tab 30, affixed to the terminal post 16, provides for electrical contact between the post and an external load.

Within the recess 18 and threadably engaged with the terminal post 16 is a self-threading sealant-containing nut 32. A suitable type of nut is that available commercially under the tradename PALNUT (Serial

- 4 -

Number SKW188008SC). This type of nut extrudes an acid-resistant mastic when screwed down on the post and thus provides a second seal 34 about the terminal post 16 and the bore 20 within the recess 18. Epoxy resin provides a third seal 36 filling the recess and surrounding the nut head.

Referring now to Figure 2, there is shown another sealed battery similar to that of Figure 1 except that the terminal post 16 includes an opening 38. A self-tapping screw 40 is threadably engaged with the terminal post inside the opening 38. Mastic sealant is applied to the underside of the head of the screw 40 prior to the insertion of the screw into the terminal post 16. A mastic seal 34 is produced about the post 16 and the bore 20 within the recess 18. The tab 30 is affixed to the screw 40.

Whilst both the sealed batteries described above may be made to most capacities, the seal assembly 12 of Figure 2 is particularly suitable for small batteries as it may be made physically smaller than the assembly 10 of Figure 1.

It should be appreciated that sealed batteries according to the invention may contain other types of electrolyte instead of sulphuric acid, and that the construction may be used with both positive and negative terminals.

- 5 -

CLAIMS

1.    A sealed battery, having a case (14), a terminal post (16) passing through a bore (20) in the case, and sealed to the case, characterised in that the bore (20) is formed in the base of a recess (18) in the outside of the case (14); that the terminal post (16) is attached to the case by a fastener (32) or (40) threadably engaged with the top of the post; and that the post is sealed to the case by a seal assembly comprising a first seal (24) between the post and the inside of the case, a second seal (34) between the fastener, the post and the outside of the case, and a third seal (36) filling the recess in the case and surrounding the head of the fastener.

2.    A battery as claimed in claim 1, characterised in that the first seal is an O-ring.

3.    A battery as claimed in claim 2, characterised in that the O-ring is made from ethylene propylene copolymer.

4.    A battery as claimed in any preceding claim, characterised in that the second seal is an acid-resistant mastic material.

5.    A battery as claimed in claim 4, characterised in that the mastic material is contained in a recess in the underside of the head of the fastener and is extruded therefrom on tightening the threaded assembly.

6.    A bettery as claimed in any preceding claim, characterised in that the third seal is epoxy resin.

0025661

**Fig.1.**

**Fig.2.**

European Patent Office

**EUROPEAN SEARCH REPORT**

0025661
Application number

EP 80 30 3026

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | US - A - 1 451 348 (W.H. THORPE)<br>* Figure 1; page 2, lines 11-40; 77-79 *<br>-- | 1,4,5 | H 01 M 2/06<br>2/08 |
| | FR - A - 2 295 577 (VARTA-BATTERIE AKTIENGESELLSCHAFT)<br>* Figures 1,2; page 1, line 35 - page 2, line 6; page 2, lines 17-25 *<br>& GB - A - 1 475 972<br>-- | 2 | |
| | MACHINE DESIGN, vol. 45, no. 24, 4th October 1973, page 48 "Seal Stands up to KOH"<br>* Article 2 *<br>-- | 3,6 | **TECHNICAL FIELDS SEARCHED (Int. Cl.³)**<br>H 01 M 2/06<br>2/30<br>2/20<br>2/08<br>2/00<br>H 01 G 9/10 |
| | FR - A - 1 525 364 (SAFT)<br>* Page 2, left-hand column, lines 34-41 *<br>-- | 6 | |
| A | GB - A - 744 277 (OLDHAM & SON)<br>* Figure 2; page 4, lines 50-75 *<br>-- | | |
| A | GB - A - 16 509 (ORL. OLDHAM) 1914<br>* Figure 1; page 2, lines 24-42 *<br>---- | | **CATEGORY OF CITED DOCUMENTS**<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons<br><br>&: member of the same patent family, corresponding document |

The present search report has been drawn up for all claims

| Place of search | Date of completion of the search | Examiner |
|---|---|---|
| The Hague | 16-12-1980 | D'HONDT |

EPO Form 1503.1  06.78